# FASCICULE DE BREVET EUROPEEN

(11) **EP 0 615 370 B1**
(45) Date de publication et mention de la délivrance du brevet: **12.08.1998**
(21) Numéro de dépôt: 94400519.8
(22) Date de dépôt: 09.03.1994
(51) Int. Cl.: H04L 29/06, G06F 13/38

(54) **Système de communication avec un réseau**
Netzwerkübertragungssystem
Network communication system

(30) Priorité: 12.03.1993 FR 9302902
(43) Date de publication de la demande: 14.09.1994
(73) Titulaire: BULL S.A., 92800 Puteaux (FR)
(72) Inventeur: Boucher, Gérard, F-78610 Le Perray en Yvelines (FR); Gillon, Jean-Marc, F-78570 Andresy (FR); Perrin, Robert, F-75019 Paris (FR); Ravaux, Paul, F-78340 Les Clayes sous Bois (FR)
(74) Mandataire: Gouesmel, Daniel

(56) Documents cités:
- EP-A- 0 255 096
- WO-A-89/03086
- FR-A- 2 699 706
- 6 TH MEDITERRANEAN ELECTROTECHNICAL CONFERENCE 22 Mai 1991 , LJUBLJANA, SLOVENIE pages 1025 - 1028 VEIGA ET JEPSEN 'SESTA: A Personal Computer FTAM and VT System'
- PROCEEDINGS COMPUTER NETWORKING SYMPOSIUM 17 Novembre 1986 , WASHINGTON DC, ETATS-UNIS pages 205 - 213 AMIRFAIZ 'Design and Implementation of a Generic Gateway'

## Description

La présente invention concerne un système de communication avec un réseau. Elle est plus particulièrement applicable à un réseau de type FDDI dont le support de transmission est constitué par des fibres optiques, réseau normalisé à l'ANSI sous la référence X3T9-5 et à l'I.S.O., Organisation Internationale de normalisation.

On sait que les réseaux sont constitués par une pluralité de terminaux ou stations reliés entre eux par une liaison de transmission (dans le cas d'un réseau de type FDDI, le support de transmission correspondant est donc constitué par des fibres optiques). Un ordinateur relié à un réseau est considéré comme un terminal.

De nombreux réseaux modernes fonctionnent suivant un même modèle de référence. Les plus connus sont les modèles de référence OSI ou encore TCP-IP. Ces modèles restent voisins en ce qui concerne la définition de leur architecture sous forme de couches normalisées. Ainsi, dans le modèle OSI, il y a sept couches d'activité différentes, la couche la plus basse (couche 1) correspondant à la transmission physique des signaux, la couche supérieure (couche 7) correspondant aux fonctions réalisées par les programmes d'application (plus simplement appelées applications) et les utilisateurs du réseau considéré.

La tendance du développement technologique des réseaux et l'utilisation de terminaux de plus en plus nombreux conduisent à développer des processeurs de communication associés le plus souvent à un ordinateur et ayant pour objet de réduire la charge de l'unité centrale de celui-ci, en effectuant une partie de la gestion des communications de ce dernier avec les autres terminaux du réseau. Sur un même réseau, on peut faire communiquer des ordinateurs de type différents et utilisant des systèmes d'exploitation (operating system) différents.

L'association d'un ordinateur et d'un processeur de communication constitue ce que l'on peut appeler un système de communication avec un réseau.

Dans cette association, le rôle du processeur de communication (qu'on peut appeler également système de transmission de données) est d'adapter les conditions de transmission des informations sur le bus de l'ordinateur auquel il est connecté, aux conditions de transmission sur le réseau, celles-ci étant totalement différentes. Un tel processeur de communication permet de faire dialoguer des applications supportées par plusieurs systèmes d'exploitation d'ordinateurs différents entre eux. En particulier, il permet de faire dialoguer les différentes couches de communication du système d'exploitation d'un premier ordinateur avec les différentes couches de communication des systèmes d'exploitation d'autres ordinateurs connectés directement ou indirectement à ce même réseau. On connaît par exemple un tel processeur de communication qui possède l'architecture simplifiée montrée à la figure 1 et qui est décrite par exemple soit dans le brevet français n° 2 698 189, ou encore dans le brevet français n° 2 699 706.

Un tel processeur de communication, désigné par NCC permet d'assurer la gestion du transfert de données entre un ordinateur HOST muni d'un bus interne PSB, ordinateur dont le système d'exploitation est désigné par SE₁, et un réseau RE par exemple de type FDDI. Le bus PSB est par exemple un bus de type MULTIBUSII (marque déposée par la Société INTEL) normalisé suivant la norme IEEE1296 (Institute of Electrical and Electronic Engineer).

Un tel processeur NCC comprend les trois parties essentielles suivantes :
- la première partie, appelée GPU (sigle anglais de General Purpose Unit) est par exemple du modèle décrit dans le brevet français N° 2 679 352. Cette partie est munie d'un système d'exploitation par exemple du type décrit dans le brevet français n° 2 679 351. Le but de cette partie GPU est d'assurer d'une part l'initialisation de l'ensemble du coupleur NCC et d'autre part d'assurer le dialogue avec l'ordinateur HOST par l'intermédiaire du bus PSB, en respectant les normes d'utilisation de ce bus et en se conformant à la nature du système d'exploitation SE₁ de l'ordinateur HOST. Par ailleurs, la partie GPU assure le transfert physique des données entre le bus PSB et la seconde partie DEA, dite dispositif adaptateur qui est directement connectée au réseau RE. La fonction de cette partie DEA est décrite ci-dessous.
- la partie DEA est par exemple du type décrit, soit dans le brevet français N° 2 650 412 pour la partie matérielle, soit dans le brevet français N° 2 695 740, pour ce qui concerne la partie logicielle. Cette partie DEA assure la transmission physique des données entre la partie GPU et le réseau RE, ainsi que la connexion physique au réseau.
- la troisième partie, appelée PPA est en fait un coprocesseur de communication destiné plus particulièrement à la gestion des différentes couches de télécommunication du modèle OSI, ou encore du modèle TCP-IP. Aussi bien en ce qui concerne le modèle OSI, que TCP-IP, la partie PPA assure la gestion des couches de communication C₄, C₃, C₂, c'est à dire, respectivement des couches de transport, de réseau, et de liaison de données.

Les couches de communication C₂ à C₄ communiquent entre elles par l'intermédiaire de fonctions primitives permettant à deux couches voisines de dialoguer entre elles. Ainsi les deux couches C₂ et C₃ communiquent entre elles par l'intermédiaire de l'ensemble de fonctions ST₂, alors que les couches C₃ et C₄ communiquent par l'intermédiaire de l'ensemble de fonctions ST₃. Par ailleurs C₄ communique avec le monde extérieur c'est à dire par exemple avec des applications externes par l'intermédiaire d'une interface SH.

Dans une forme de réalisation préférée dans l'invention, les ensembles de fonctions ST₂, ST₃, SH sont des fonctions connues dans la pratique courante sous le nom de STREAMS. Ces fonctions standard sont par exemple définies dans les documents suivants :
- Unix Système V Release 4 - STREAMS Programmer's Guide, ATT issue 1
- Unix System V Release 3.2 - STREAMS Programmer's guide, ATT (ISBN : 0-13-944810-1) : 1989.

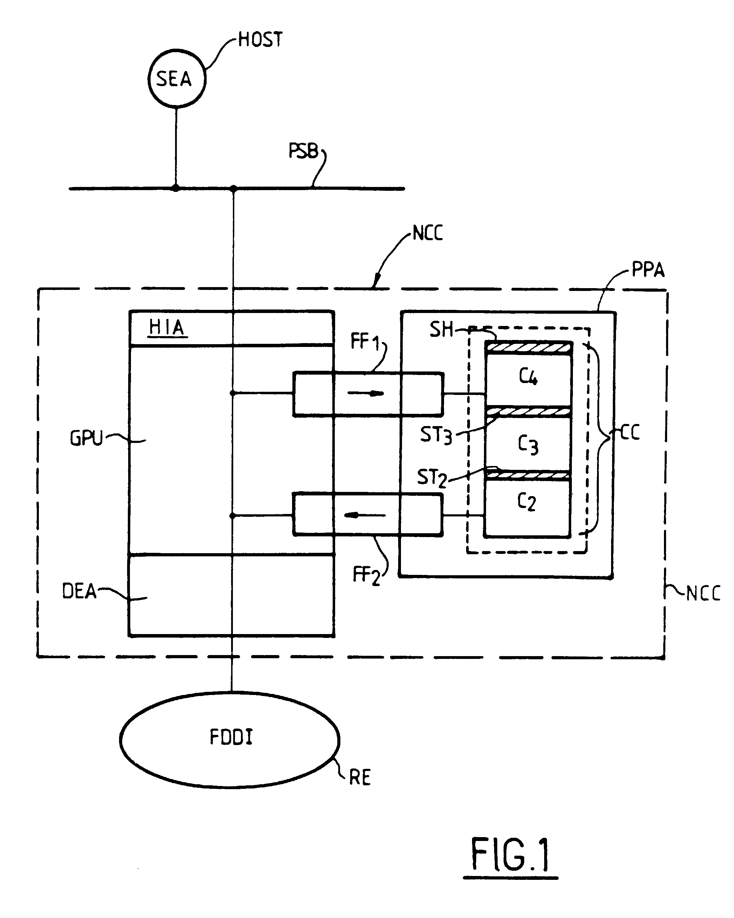

Dans l'exemple de réalisation montré à la figure 1, lorsque l'ordinateur HOST envoie un message vers le réseau RE, ou bien lorsqu'un message provient du réseau RE, celui-ci transite vers les couches C₂ à C₄ de PPA, par l'intermédiaire d'une mémoire FiFo, à savoir FF₁ ou FF₂ selon que ce message est transmis vers DEA, ou vers GPU respectivement. Lorsqu'on veut soit établir une demande de connexion, soit envoyer des messages vers tout ou partie des stations connectées au réseau, provenant ou allant vers HOST, celle-ci ou ceux-ci passent par l'intermédiaire de SH.

Les couches C₂ à C₄ et les différentes fonctions ST₂, ST₃ et SH, ainsi que le système d'exploitation de la partie PPA, constituent le code de couche de communication CC qui est mis en oeuvre par le coprocesseur de communication PPA.

Le rôle essentiel du coprocesseur de communication PPA est de soulager le système hôte de la gestion des couches de communication que celui-ci effectue habituellement, tout en conservant au processeur de communication NCC des performances extrêmement élevées, en ce qui concerne le débit de transmission des données vers ou depuis le réseau.

On peut noter par ailleurs, que la partie GPU comprend une partie HIA qui la relie au bus PSB. HIA qui peut également être appelé adaptateur hôte, est fonction de la nature du bus interne de ce dernier. Dans le cas où, PSB est un bus MULTIBUSII, la partie HIA est formée par un coprocesseur de type VN82C389 fabriqué par la Société INTEL.

L'association de l'ordinateur HOST muni de son système d'exploitation SE₁, qui est par exemple de type GCOS7 développé par la Société demanderesse, et du processeur de communication NCC constitue le système de communication SCI dont un mode de réalisation particulièrement avantageux est constitué par la présente invention, permettant d'obtenir de hautes performances en matière de débit de données. Ceci est obtenu en associant à la structure materielle décrite dans le brevet 2 699 706 précité une architecture logicielle incluant un serveur de telecommunication associé au système d'exploitation de l'ordinateur HOST. Selon l'invention, le système de communication avec un réseau, comprenant un ordinateur connecté au moyen d'un bus à un processeur de communication lui-même relié à la liaison spécifique du réseau, l'ordinateur comportant un premier système d'exploitation associé à une pluralité d'applications échangeant les données avec les terminaux raccordés au réseau et un premier gestionnaire d'entrée/sortie organisant sur le bus le transfert des données vers un second gestionnaire d'entrée/sortie du processeur, lequel comprend un second système d'exploitation organisant le travail du processeur pour transmettre les données du bus vers le réseau et réciproquement
est caractérisé en ce que il comprend :
- un serveur de communication associé au premier système d'exploitation,
- un code de communication appartenant à au moins un modèle d'interconnexion de systèmes ouverts associé au second système d'exploitation, le serveur fournissant au premier système d'exploitation les moyens d'accès aux différentes couches de communication du code lequel met en oeuvre pour chaque couche, les protocoles spécifiques de celle-ci, afin d'assurer la transmission vers l'hôte ou vers le réseau.

D'autres caractéristiques et avantages de la présente invention apparaitront dans la description suivante donnés à titre d'exemple non limitatif et en se référant aux dessins annexés.

Sur ces dessins :
La figure 1 rappelle ce que sont les différents éléments constitutifs essentiels d'un système de communication.
La figure 2 montre quels sont les éléments constitutifs essentiels de l'architecture logiciel du système de communication selon l'invention,
La figure 3 montre quels sont les éléments constitutifs essentiels du code de communication présent dans le coprocesseur de communication, appartenant au système selon l'invention,
La figure 4 montre quels sont les éléments constitutifs essentiels du serveur de télécommunication appartenant au système de communication selon l'invention.

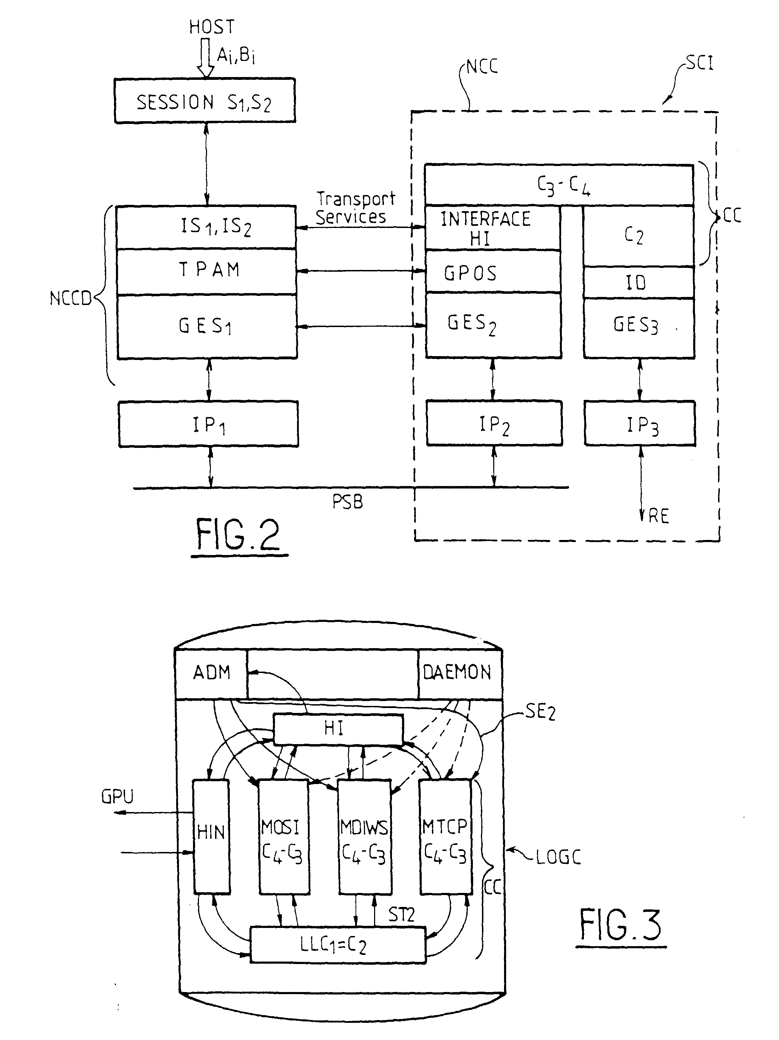

On se réfère désormais à la figure 2 qui montre respectivement les éléments constitutifs essentiels de l'architecture logiciel de l'ordinateur HOST et ceux du processeur de communication NCC.

Les éléments de l'architecture logiciel de HOST sont les suivants :
- une pluralité d'applications Aᵢ et Bᵢ, respectant par exemple chacune les normes du modèle de référence OSI pour Aᵢ et les normes du modèle de référence TCP-IP pour Bᵢ. Ces applications, pour être totalement mises en oeuvre, ont besoin d'un certain nombre d'informations et de données qui ne se trouvent pas nécessairement dans les mémoires ou les périphériques associés de l'ordinateur HOST. Ces informations et données peuvent se trouver dans des terminaux connectés au réseau RE ou même à des réseaux plus éloignés interconnectés avec ce même réseau RE. Ces applications ont donc besoin d'établir un dialogue avec d'autres applications mises en oeuvre par des terminaux raccordés à RE.
- les sessions S₁ et S₂ correspondant respectivement aux applications Aᵢ et Bᵢ qui établissent précisément les conditions du dialogue avec les applications correspondantes des autres terminaux de RE. L'ensemble de sessions S₁ est conforme aux normes du modèle OSI, alors que l'ensemble de sessions S₂ est conforme aux normes du modèle TCP-IP.
- les deux interfaces IS₁, IS₂ fournissant respectivement les services de transport aux sessions S₁ et S₂ pour les modèles OSI et TCP-IP.
- le module TPAM supportant le protocole de transport entre l'ordinateur HOST et le processeur de communication NCC, et plus particulièrement le protocole de transport entre HOST et la partie PPA de NCC. TPAM est le sigle anglo-saxon de Transport Protocole Access Module.
- le gestionnaire d'entrée/sortie GES₁ qui est associé à interface IP₁.

On considère que l'ensemble des éléments IS₁-IS₂, TPAM, GES₁ forme un serveur de communication désigné par NCCD, (la lettre D signifiant Driver en anglais, terme correspondant à module). Etant donné qu'il est possible d'associer à l'ordinateur HOST, plusieurs processeurs de communication identiques à NCC, il est évident que dans ce cas, l'architecture logiciel de HOST comprend plusieurs serveurs de communication identiques à NCCD, chacun étant associé à un processeur de communication déterminé. Pour simplifier le raisonnement, on ne considère ici et dans la suite du texte, que HOST n'est associé qu'à un seul NCC, et ne comprend donc que le seul serveur de communication correspondant à savoir NCCD.

Les différents éléments constitutifs essentiels de l'architecture logiciel du processeur de communication NCC sont les suivants :
- l'interface physique IP₂ correspondant à l'interface physique IP₁,
- le gestionnaire d'entrée/sortie GES₂ correspondant au gestionnaire d'entrée/sortie GES₁.
- Les deux interfaces physique IP₁ et IP₂ sont des interfaces MULTIBUSII, définis par la norme IEEE1296 précitée. Ils peuvent donc être réalisés de la même manière que l'élément HIA montré à la figure 1 et constitués chacun par un coprocesseur MPC.

L'ensemble des deux couches constituées par l'interface physique MULTIBUSII et le gestionnaire d'entrée/sortie, qu'il s'agisse de GES₁ et IP₁, ou GES₂ et IP₂ est connu sous le nom de protocole PLANET mis au point par la Société demanderesse et décrit dans le brevet français n° 2 633 414 ayant pour titre "système informatique à interconnexion centrale" .
- Le système d'exploitation GPOS qui est disposé dans la partie GPU de NCC est décrit dans le brevet N° 2 679 351 précité.
- l'interface HI disposée dans la partie PPA, appelée interface hôte (sigle anglo-saxon de Host Interface) qui assure le dialogue entre les différentes couches C₄ du code de communication CC et l'une ou l'autres des interfaces IS₁ et IS₂ de HOST. L'interface HI assure donc le service de transport entre le code de communication CC et les sessions S₁ et S₂ de l'hôte HOST. L'interface HI assure également la manipulation des chemins de données entre l'hôte HOST et PPA. L'interface HI est un composant logiciel qui est stocké dans PPA. Cette interface ouvre et ferme les connexions, aussi bien pour le compte de HOST que pour celui de C₄, effectue les transferts de données et les contrôles de flux entre l'hôte HOST et le code de communication CC, qu'il s'agisse de la partie du code de communication relative au modèle OSI ou celle relative au modèle TCP-IP. L'interface SH dont il est parlé plus haut est de fait située entre HI et C₄.

HI permet également au flux de données d'utiliser les entités de transport du code CC (Couche C₄), en effectuant l'adaptation entre les protocoles de transport relatifs à ces couches et le protocole de transport TPA utilisé entre l'hôte HOST et NCC.
- le code de communication CC composé des couches C₂ à C₄. Ainsi qu'il a été dit plus haut, ce code est relatif aussi bien au modèle de référence ISO qu'au modèle TCP-IP. On dit également qu'il fournit les empilements de communications C₂ à C₄ pour l'un ou l'autre de ces modèles, ces empilements étant désignés le plus souvent sous le vocable anglo-saxon de STACK. Le code CC comprend donc un stack OSI et un stack TCP-IP. Il convient de préciser que la couche C₂, dite LLC, dite couche de liaison de données est commune à ces deux stacks.
- une interface de communication HIN etntre GPOS et CC.
- l'interface ID et le gestionnaire d'entrée/sortie GES₃. Ils forment le logiciel du dispositif adaptateur DEA, qui est décrit dans le brevet français n° 2 695 740 précitée, et permet de réaliser la connexion de NCC au réseau RE. A ces derniers éléments, il convient d'ajouter l'interface physique IP3 de connexion de DEA avec le réseau RE, également décrit dans cette même demande.

Les grandes lignes du fonctionnement de l'architecture montrées à la figure 2 sont les suivantes :

On suppose qu'une application quelconque Aᵢ appartenant à l'ordinateur HOST désire échanger des informations avec une application quelconque, dite application éloignée située sur un terminal quelconque relié au réseau RE. Cette application passe par l'intermédiaire d'une session correspondante appartenant à l'ensemble S₁, session qui va accomplir le rôle qui lui est normalement dévolu par le modèle de référence OSI, (le raisonnement qui est tenu ici serait bien entendu équivalent pour une application Bᵢ et une session S₂), c'est-à-dire qu'elle va négocier avec la session correspondante du terminal destinataire rattachée au réseau RE, l'établissement et la terminaison du dialogue Ai et l'application éloignée. La session utilise alors l'interface IS₁ pour dialoguer avec l'interface HI afin d'établir le service de transport correspondant. Dans le cas présent, IS₁ est donc le demandeur de service de transport, alors que l'interface HI est le fournisseur de service de transport qui va être utilisé entre le système SCI et le terminal éloigné avec lequel dialogue l'application Aᵢ. Le module TPAM prend ensuite le relai de l'interface IS₁ pour dialoguer avec le système GPOS pour établir la connexion de transport entre l'ordinateur HOST et le processeur de communication NCC. Le protocole de transport utilisé entre ces deux derniers éléments est appelé TPA (Transport Protocol Access). Ce protocole est un protocole dérivé du protocole appelé TPI (Transport Provider Interface) défini par la Société ATT. Ce protocole permet un échange contrôlé de données entre l'hôte et l'interface HI. Il est principalement basé sur la notion de port de communication (Communication Plug). En fait, un port est un élément d'identification d'une connexion entre le module TPAM et l'interface HI. Cet élément d'identification a une valeur déterminée.

Le protocole TPA définit une interface de message vers ou depuis le fournisseur de transport (la couche C₄ du code de communication CC) : cela signifie que l'utilisateur (ici l'application Aᵢ) communique avec le fournisseur de transport ou que ce dernier communique avec l'utilisateur au moyen de primitives de services de transport transportant des messages. Ces derniers sont transmis vers ou depuis l'ordinateur HOST (c'est-à-dire vers ou depuis TPAM) par le moyen des dits ports. Ces ports permettent donc de contrôler l'échange de messages entre TPAM et GPOS. Pendant son utilisation, chaque port est dédié à une connexion de transport déterminée. Ainsi, au fournisseur de transport du modèle OSI, ou au fournisseur de transport du modèle TCP, ou encore au fournisseur de transport du modèle DIWS (ce modèle qui est également utilisé par le système de communication SCI selon l'invention correspond au modèle appelé ISO/DSA défini par la demanderesse), correspondent des ports parfaitement déterminés et différents. Par ailleurs, chaque connexion de transport, que ce soit du modèle OSI ou DIWS ou TCP-IP (on dit encore session de transport) est gérée par une seule connexion de type TPA.

II doit être rappelé ici que DIWS, également appelé ISO/DSA est simplement une variante du modèle OSI (ISO est le sigle français correspondant au sigle anglais OSI). De ce fait, on peut dire que les modèles OSI et ISO/DSA ne forment qu'un seul modèle général, à savoir OSI.

Dès que les échanges permettant d'établir une connexion de transport entre TPA et GPOS sont terminés, le relai est pris par le gestionnaire d'entrée/sortie GES₁ et son interface IP₁, ainsi que par les éléments correspondants GES₂ et IP₂ de NCC pour transporter les données, via le bus PSB vers le processeur de communication NCC, selon le protocole "PLANET" d'une manière qui est résumée dans la demande de brevet n° 91 08907 précitée. Les données sont alors stockées dans la mémoire de l'élément GPU (cette mémoire est du type double accès et est plus amplement décrite dans le brevet n° 2 679 352 précitée).

Il convient de préciser qu'à la figure 2, on a représenté des liaisons directes entre IS₁ et HI, TPAM et GPOS ainsi que entre GES₁ et GES₂. Cela signifie que l'élément IS₁ communique directement avec HI, que TPAM communique directement avec GPOS et que GES₁ communique directement avec GES₂. Il est bien évident cependant que les informations échangées entre chacun de ces éléments sont véhiculées par les autres éléments appartenant aux couches inférieures. Ainsi, les données échangées entre IS₁ et HI sont véhiculées physiquement par TPAM et GPOS de même que les informations échangées entre TPAM et GPOS sont véhiculées physiquement par GES₁ et GES₂ et ainsi de suite.

Dès que les trames de données munies de leurs informations relatives à la session, au protocole de transport TPA parviennent à l'élément GPU, celui-ci les transmet à l'interface HI qui les transmet lui-même aux différentes couches C₄ du code de communication CC. Ce code de communication CC débarrasse les données utiles des éléments d'informations relatifs au protocole de transport TPA, et les munit, pour chacune des couches C₄ des protocoles correspondants. Ceci est vrai aussi bien pour les modèles OSI, TCP-IP. Il convient de remarquer que la couche C₂ est commune à ces différents modèles. Dès que l'élément PPA qui met en oeuvre ce code de communication CC a terminé son travail, les trames de données ainsi constituées sont transmises à nouveau sous la conduite de GPOS à la mémoire double accès de GPU à travers HIN et FF₂. Ensuite, sous la conduite de GPOS, ces données sont transmises à l'interface ID et au gestionnaire d'entrée/sortie GES₃ et à l'interface physique correspondante IP₃ du dispositif adaptateur DEA, d'une manière qui est indiquée dans le brevet n° 2 695 740 précité. Les données sont alors transmises sur le réseau RE et arrivent à leur destinataire final.

Réciproquement, des trames de données provenant de RE traversent lP₃, GES₃ et ID avant d'être stockées dans la mémoire double accès puis transférées sous la conduite de GPOS à travers la FiFo FF₂ et HIN vers la couche C₂ (LLC₂) de CC. PPA met alors en oeuvre successivement les couches C₂, C₃ puis C₄ qui munit les données utiles, auparavant débarrassées des éléments de protocoles des couches C₂, C₃, C₄ nécessaires à la circulation des trames sur le réseau RE, des éléments d'information relatifs à TPA. C₄ transmet ensuite les trames ainsi constituées à HI qui les envoie vers GPU qui, sous la conduite de GPOS, les transmet ainsi à travers GES₁ et GES₂ vers TPAM qui les fait remonter vers IS₁-IS₂, S₁-S₂ puis Aᵢ-Bᵢ.

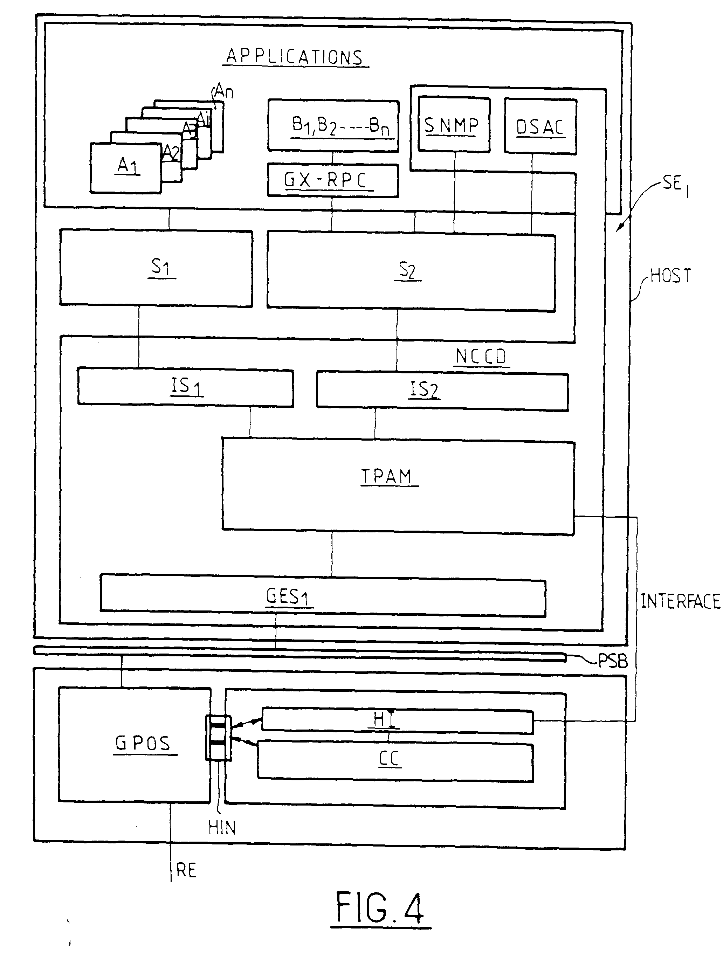

On considère désormais la figure 4 qui montre plus en détail quels sont les éléments constituant le module NCCD, et plus particulièrement ce que sont les éléments IS1, TPAM et GES1 et comment ils sont liés les uns aux autres à l'intérieur du module NCCD.

On a représenté à la figure 4 l'ensemble des applications A1, A2, ..., Ai, An ainsi que les applications B1 à Bn.

Les applications communiquent avec l'ensemble de sessions S1 qui sont de type VCAM (Conforme au modèle OSI,). Cet ensemble de sessions SI communique avec l'interface IS1 qui est du type TSI (Transport Session Interface) qui est l'interface entre les sessions de type VCAM et le module TPAM. TSI assure également l'interface entre les sessions S2 et le module TPAM pour les modèles de référence OSI. Cette interface est décrite dans les documents 2297M/1,0, 2298 M/1,0 et 2299 M/1,0 de la société demanderesse.

Les deux ensembles constitués par GX-RPC et S2 constituent un ensemble de sessions propre au système d'exploitation GCOS7 adapté au monde UNIX, et au modèle de référence TCP-IP. L'interface correspondante IS2 est une interface de type GXTIA (signifiant GXTI Access), cette dernière interface étant propre au modèle de référence TCP-IP. GXTI et GXTIA sont décrits dans le document Marketing 47A2 64UC Rev. O de la demanderesse et GX-RPC dans les documents relatifs à GCOS7.

Le module TPAM outre le support du protocole TPA et la gestion des branchements de type TPA déjà mentionné plus haut, pilote le gestionnaire d'entrée/sortie GES1.

Par ailleurs, le module NCCD comporte un agent administratif SNMP-DSAC communiquant par l'intermédiaire de l'interface IS2 avec le module TPAM. Cet agent est connu et chargé du travail d'administration des différentes couches des modèles de référence OSI et TCP-IP et FDDI (agent SNMP, à travers le standard SNMP MIB2, extension FDDI).

On considère la figure 3 qui montre les différents modules logiciels qui sont mis en oeuvre par la partie PPA du contrôleur de communication NCC.

Ce module logiciel mis en oeuvre par PPA est ici désigné par LOGC. Il comprend :
- le système d'exploitation SE2 qui est par exemple du type CNS-A1 développé et commercialisé par la compagnie demanderesse.
- l'interface HI décrite ci-dessus.
- les trois modules de communication MOSI, MDIWS, MTCP qui concernent la partie du code de communication CC mettant en oeuvre les couches C4 et C3 des modèles de référence OSI, ISO/DSA, TCP-IP.

Par référence à ce qui est indiqué plus haut, MDIWS est une variante de MOSI, module spécifique développé par la demanderesse. Le module correspondant au concept général d'un module de communication mettant en oeuvre le module OSI est de fait MOSI.
- la couche de communication LLC1 correspondant à la couche C2 des modèles de référence OSI, ISO-DSA, TCP-IP. Ainsi qu'il a été dit plus haut, la couche LLC1 est commune aux trois modèles de référence précités.
- l'interface de communication HIN entre la partie PPA et la partie GPU. Cette interface HIN assure le transfert des données entre GPU et PPA, aussi bien à la réception des trames de données provenant du réseau qu'à l'émission de trames de données vers ce réseau. La manière dont l'interface HIN effectue le transfert des données entre GPU et PPA, sous la conduite du système d'exploitation GPOS de GPU est analogue à celle qui est décrite par exemple dans l'un ou l'autre des brevets 2 665 810 et 2 668 275. L'une comme l'autre de ces demandes décrivent en effet la manière dont s'effectue le transfert de données à travers un contrôleur de communication entre une base commandée par un premier microprocesseur et une périphérie commandée par un second microprocesseur, ces premiers et seconds microprocesseurs jouant le même rôle que les microprocesseurs que possèdent respectivement les parties GPU et PPA (voir brevets 2 679 352 et 2 699 706 précités).
- le module de configuration DAEMON qui construit l'empilement des différentes couches appartenant à chacun des différents modules MOSI MDIWS, MTCP et LLC1. Il est nécessaire de construire celui-ci en créant des liens entre les différents modules grâce aux différentes fonctions de type STREAMS, à savoir SH entre HI et les trois modules MOSI, MDIWS, MTCP, entre ces modules et le module LLC1 au moyen des fonctions ST2. Par ailleurs, il est également nécessaire de créer des liens entre les couches C4 et C3 de ces différents modules, grâce aux fonctions primitives ST3. En effet, à l'initialisation du processeur de communication NCC et par conséquent à l'initialisation de la partie PPA, les modules sont isolés les uns des autres. Cela résulte de la philosophie de conception des fonctions de type STREAMS : selon cette philosophie, un module quelconque ne sait pas avec qui il doit discuter, mais il sait qu'il doit discuter avec d'autres modules. Il est donc nécessaire de créer ces liens lors de l'initialisation.
- un module d'administration ADM permettant la manipulation des informations contenues dans les couches C₄ à C₂ permettant de les configurer, initialiser,... Ce module communique donc respectivement avec HI à travers SH et avec MOSI, MDIWS et MTCP par l'intermédiaire de fonctions streams.

Par ailleurs, les liens entre HI et LLC1 d'une part et l'interface HIN, d'autre part s'effectuent également au moyen de fonctions de type STREAMS.

## Revendications

1. Système de communication (SCI) avec un réseau (RE) comprenant un ordinateur (HOST) associé au moyen d'un bus (PSB) à un processeur de communication (NCC) lui-même relié à la liaison spécifique du réseau, l'ordinateur comportant d'une part un premier système d'exploitation (SE1) associé à une pluralité d'applications (Ai, Bi) échangeant des données avec les terminaux raccordés au réseau et, d'autre part un premier gestionnaire d'entrée/sortie (GES1) organisant sur le bus le transfert des données vers un second gestionnaire d'entrée/sortie (GES2) du processeur (NCC) lequel comprend un second système d'exploitation (GPOS), organisant le travail du processeur pour transmettre les données du bus vers le réseau et réciproquement,
caractérisé en ce qu'il comprend :
- un serveur de télécommunication (NCCD) associé au premier système d'exploitation (SE1), incluant le premier gestionnaire d'entrée/sortie,
- un code de communication (CC) appartenant à un premier et un second modèle d'interconnexion de système ouvert respectivement de type OSI et TCP/IP associé au second système d'exploitation,
le serveur fournissant au premier système d'exploitation les moyens d'accès (TPAM, IS1, IS₂) aux différentes couches (C₂ à C₄) du code (CC), ce dernier mettant en oeuvre pour chacune des couches le composant, les protocoles spécifiques de cette dernière, afin d'assurer la transmission vers l'ordinateur (hôte) ou vers le réseau.

2. Système de communication selon la revendication 1 caractérisé en ce que le serveur de communication (NCCD) comprend :
- une première et une seconde interface (IS₁, IS₂) fournissant respectivememt le service de transport à un premier et second ensemble de sessions (S₁, S₂) appartenant chacun respectivement au (premier et second) modèle d'interconnexion de système ouvert (OSI, TCP-IP), chaque session (d'un ensemble (S₁, S₂) correspondant à l'une des dites applications (Aᵢ, Bᵢ),
- un module (TPAM) supportant le protocole de transport entre l'ordinateur et le processeur,
- un gestionnaire d'entrée/sortie (GES₁) associé à une interface physique (IP₁) spécifique du bus (PSB), commandé par le dit module.

3. Système de communication selon la revendication 2, caractérisé en ce que le processeur de communication (NCC) comprend :
- une interface physique avec le bus (IP₂) correspondant à l'interface physique (IP₁) appartenant au serveur de télécommunication (NCCD),
- un gestionnaire d'entrée/sortie (GES₂) correspondant au gestionnaire d'entrée/sortie du serveur de communication,
L'ensemble des deux couches constituées par l'interface physique et le gestionnaire d'entrée/sortie (GES₁-IP₁, GES₂-IP₂) constituant le protocole PLANET,
- le code de communication (CC) étant composé des couches de communication C₄ à C₂, c'est-à-dire les couches de transport, de réseau et de liaison de données,
- une interface (HI) assurant le dialogue entre les différentes couches C4 du code de communication et l'une ou l'autre des interfaces (IS₁) de session appartenant au serveur de télécommunication (NCCD) et assurant le service de transport entre le code de communication et l'un ou l'autre des ensembles de sessions (S₁, S₂)
- des moyens de connexion du processeur (NCC) au réseau (RE).

4. Système de communication selon la revendication 3 caractérisé en ce que le code de communication (CC) est supporté par un troisième système d'exploitation (SE2) qui est du type CNS-A1, et comprend deux modules de communication (MOSI, MTCP) concernant respectivement la partie du code de communication mettant en oeuvre les couches C4 et C3 des modèles de référence OSI, TCP-IP, la couche de communication C2, étant commune aux deux modèles de référence précités.

## Patentansprüche

1. System (SCI) für die Kommunikation mit einem Netz (RE), mit einem Rechner (HOST), der über einen Bus (PSB) mit einem Kommunikationsprozessor (NCC) verbunden ist, der seinerseits mit der spezifischen Verbindung des Netzes verbunden ist, wobei der Rechner einerseits ein erstes Betriebssystem (SE1), dem mehrere Anwendungen (Ai, Bi) zugeordnet sind, die mit den mit dem Netz verbundenen Terminals Daten austauschen, und andererseits ein erstes Eingangs/Ausgangs-Managementprogramm (GES1) enthält, das die Übertragung von Daten auf dem Bus an ein zweites Eingangs/Ausgangs-Managementprogramm (GES2) des Prozessors (NCC) organisiert, der ein zweites Betriebssystem (GPOS) enthält, das die Arbeit des Prozessors organisiert, um die Daten vom Bus zum Netz und umgekehrt zu übertragen,
dadurch gekennzeichnet, daß es enthält:
- einen Telekommunikationsserver (NCCD), der dem ersten Betriebssystem (SE1) zugeordnet ist und das erste Eingangs/Ausgangs-Managementprogramm enthält,
- einen Kommunikationscode (CC), der einem ersten und einem zweiten Modell eines offenen Systemverbundes des Typs ISO bzw. TCP-IP zugehört und dem zweiten Betriebssystem zugeordnet ist,
wobei der Server an das erste Betriebssystem die Mittel (TPAM, IS₁, IS₂) für den Zugriff auf die verschiedenen Schichten (C₂ bis C₄) des Codes (CC) liefert, wobei dieser letztere für jede der ihn aufbauenden Schichten die spezifischen Protokolle dieser letzteren ausführt, um die Übertragung zum Rechner (HOST) oder zum Netz sicherzustellen.

2. Kommunikationssystem nach Anspruch 1, dadurch gekennzeichnet, daß der Kommunikationsserver (NCCD) enthält:
- eine erste und eine zweite Schnittstelle (IS₁, IS₂), die den Transportdienst an eine erste und eine zweite Gesamtheit von Sitzungen (S₁, S₂) liefern, die jeweils zum ersten bzw. zum zweiten Modell eines offenen Systemverbundes (ISO, TCP-IP) gehören, wobei jede Sitzung einer Gesamtheit (S₁, S₂) einer der Anwendungen (Aᵢ, Bᵢ) entspricht,
- ein Modul (TPAM), das das Transportprotokoll zwischen dem Rechner und dem Prozessor unterstützt,
- ein Eingangs/Ausgangs-Managementprogramm (GES₁), das einer für den Bus (PSB) spezifischen physischen Schnittstelle (IP₁) zugeordnet ist und von dem Modul gesteuert wird.

3. Kommunikationssystem nach Anspruch 2, dadurch gekennzeichnet, daß der Kommunikationsprozessor (NCC) enthält:
- eine physische Schnittstelle mit dem Bus (IP₂), die der physischen Schnittstelle (IP₁) entspricht, die zum Telekommunikationsserver (NCCD) gehört,
- ein Eingangs/Ausgangs-Managementprogramm (GES₂), das dem Eingangs/Ausgangs-Managementprogramm des Kommunikationsservers entspricht,
wobei die Gesamtheit der zwei Schichten, die durch die physische Schnittstelle und durch das Eingangs/Ausgangs-Management-programm (GES₁-IP₁, GES₂-IP₂) gebildet sind, das Protokoll PLANET bilden,
- wobei der Kommunikationscode (CC) aus den Kommunikationsschichten (C₄ bis C₂), d. h. aus der Transportschicht, der Netzwerkschicht und der Leitungsschicht, gebildet ist,
- eine Schnittstelle (HI), die den Dialog zwischen den verschiedenen Schichten C4 des Kommunikationscodes und der einen oder der anderen der Sitzungsschnittstellen (IS₁), die zum Telekommunikationsserver (NCCD) gehört, sicherstellt und den Transportdienst zwischen dem Kommunikationscode und der einen oder der anderen Gesamtheit von Sitzungen (S₁, S₂) sicherstellt,
- Mittel zum Verbinden des Prozessors (NCC) mit dem Netz (RE).

4. Kommunikationssystem nach Anspruch 3, dadurch gekennzeichnet, daß der Kommunkationscode (CC) durch ein drittes Betriebssystem (SE2) unterstützt wird, das vom Typ CNS-A1 ist und zwei Kommunikationsmodule (MOSI, MTCP) enthält, die denjenigen Teil des Kommunikationscodes betreffen, der die Schichten C₄ bzw. C₃ der Referenzmodelle ISO, TCPIP ausführt, wobei die Kommunikationsschicht C2 den beiden obengenannten Referenzmodellen gemeinsam ist.

## Claims

1. Communication system (SCI) with a network (RE) comprising a computer (HOST) associated by means of a bus (PSB) with a communication processor (NCC) itself connected to a specific link of the network, the computer comprising on the one hand a first operating system (SE₁) associated with a plurality of applications (Aᵢ, Bᵢ) exchanging data with the terminals connected to the network and, on the other hand, a first input-output manager (GES₁) organising, over the bus, the transfer of data to a second input/output manager (GES₂) of the processor (NCC), which comprises a second operating system (GPOS), organising the work of the processor in order to transmit the data from the bus to the network and vice versa,
characterised in that it comprises:
- a telecommunication server (NCCD) associated with the first operating system (SE₁), including the first input/output manager,
- a communication code (CC) belonging to a first and a second model of open system interconnection, of the type OSI and TCP/IP respectively, associated with the second operating system,
the server supplying to the first operating system the means of access (TPAM, IS₁, IS₂) to the various layers (C₂ to C₄) of the code (CC), the latter implementing, for each of the layers composing it, the specific protocols of the latter in order to ensure transmission to the computer (host) or to the network.

2. Communication system according to Claim 1 characterised in that the communication server (NCCD) comprises:
- a first and a second interface (IS₁, IS₂) supplying respectively the transport service to a first and second set of sessions (S₁, S₂) each belonging respectively to the first and second model of open system interconnection (OSI, TCP-IP), each session of a set (S₁, S₂) corresponding to one of said applications (Aᵢ, Bᵢ),
- a module (TPAM) supporting the transport protocol between the computer and the processor,
- an input/output manager (GES₁) associated with a physical interface (IP₁) specific to the bus (PSB), controlled by said module.

3. Communication system according to Claim 2, characterised in that the communication processor (NCC) comprises:
- a physical interface with the bus (IP₂) corresponding to the physical interface (IP₁) belonging to the telecommunication server (NCCD),
- an input/output manager (GES₂) corresponding to the input/output manager of the communication server,
the whole of the two layers constituted by the physical interface and the input/output manager (GES₁-IP₁, GES₂-IP₂) constituting the PLANET protocol,
- the communication code (CC) being composed of the communication layers C₄ to C₂, that is, the transport, network and data-link layers,
- an interface (HI) ensuring the dialogue between the different layers C₄ of the communication code and one or other of the session interfaces (IS₁) belonging to the telecommunication server (NCCD) and ensuring the transport service between the communication code and one or other of the sets of sessions (S₁, S₂)
- means for connecting the processor (NCC) to the network (RE).

4. Communication system according to Claim 3 characterised in that the communication code (CC) is supported by a third operating system (SE₂) which is of the type CNS-A1, and comprises two communication modules (MOSI, MTCP) concerning respectively the portion of the communication code implementing the layers C₄ and C₃ of the reference models OSI, TCP-IP, the communication layer C₂ being common to the two aforementioned reference models.
